# EUROPEAN PATENT APPLICATION

(11) **EP 2 088 043 A1**
(43) Date of publication of application: **12.08.2009**
(21) Application number: 09001685.8
(22) Date of filing: 06.02.2009
(51) Int. Cl.: B60T 8/88, G01C 25/00, G01P 21/00, H03M 1/10

(54) **Fail safe test for motion sensors**

(30) Priority: 08.02.2008 US 69261
(71) Applicant: KELSEY-HAYES COMPANY, Livonia, MI 48150 (US)
(72) Inventor: Babala, Michael, Plymouth, MI 48170 (US)
(74) Representative: Schmidt, Steffen J.

(57) **Abstract**

A microprocessor applies an analog test signal to an auxiliary signal input port (50) of a motion sensor module (10). The motion sensor module (10) processes the test signal and returns the signal in digital format to the microprocessor. The microprocessor compares the returned digital test signal to the original analog test signal to determine whether circuitry within the motion sensor module is operating properly.

## Description

### BACKGROUND OF THE INVENTION

This invention relates in general to motion sensors and in particular to a fail safe test for motion sensors.

Electronic brake control systems for vehicles are becoming increasing sophisticated. Such braking systems usually include an Anti-Lock Brake System (ABS) and a Traction Control (TC) System. Additionally, a Vehicle Stability Control (VSC) System may be provided. A VSC System typically monitors vehicle motion parameters and is operable to selectively activate the vehicle wheel brakes and/or modify engine performance to avoid potential unwanted vehicle motions, such as, for example, a vehicle roll-over. A plurality of motion sensors, such as accelerometers and angular rate sensors are utilized to sense vehicle motion. The signals generated by elements within the motion sensors are typically modified by a signal conditioning circuit and then provided to a microprocessor in an Electronic Control Unit (ECU) of the electronic brake control system. The ECU microprocessor utilizes a stored algorithm to monitor the vehicle motion parameters, and, upon detecting a potential vehicle stability problem, the microprocessor initiates corrective action.

The motion sensors are typically packaged with supporting circuitry, with the package containing one or more accelerometers and/or one or more angular rate sensors. The sensor packages may also include signal conditioning circuitry. Key to successful operation of the VSC system is proper functioning of the motion sensors and signal conditioning circuitry. Accordingly, it is know to failsafe motion sensors by applying a self test to the sensor package. Such self tests typically include applying an input signal to each one of the motion sensors. The self test input signal is generated by the brake system microprocessor and applied to a self test port that is provided on the motion sensor package. If the motion sensor is operating properly, a fixed offset will appear on the sensor output signal. If the microprocessor does not detect the offset after applying the self test signal, it is an indication of a sensor malfunction and the microprocessor will generate an error signal or code. However, during the self test, the self test signal may saturate the device, thus limiting the usefulness of the sensor during the self test. Additionally, the frequency of the self test technique may be limited by the bandwidth of the motion sensor package. Furthermore, lower cost motion sensor packages typically do not include a port, or connection pin, for application of the self test signal. Therefore, it would be desirable to provide an alternate approach to fail safe testing of motion sensors.

### SUMMARY OF THE INVENTION

This invention relates to a fail safe test for motion sensors.

The present invention contemplates an electronic brake system that includes a motion sensor and an analog to digital converter having an analog signal input port, or pin, and a serial digital signal output port, the analog to digital converter being connected to the motion sensor and operable to generate a digital motion sensor output signal. The system also includes a microprocessor connected to the analog to digital converter and the analog to digital converter also includes an auxiliary signal input port.

The brake system microprocessor is operable to apply an analog test signal to the analog to digital converter auxiliary signal input port, or pin, with the analog to digital converter being operable to process the analog test signal and to serially combine the resulting digital test signal with the digital motion sensor signal. The analog to digital converter also is operable to send the combined signal back to the microprocessor. The microprocessor is operable to compare the digital test signal to a threshold that is a function of the analog test signal and to generate an error message upon the digital test signal being less than the threshold.

The present invention also contemplates a method for fail safe testing of an electronic brake system that includes providing the system components described above and then applying an analog test signal to the auxiliary input port, or pin, of the analog to digital converter. The analog test signal is processed through the motion sensor module and the processed analog test signal is then converted into a digital test signal. The digital test signal is transmitted to the microprocessor where the signal is compared to a threshold that is a function of the analog test signal. Finally, an error message is generated if the digital test signal is less than the threshold.

Various objects and advantages of this invention will become apparent to those skilled in the art from the following detailed description of the preferred embodiment, when read in light of the accompanying drawings.

### BRIEF DESCRIPTION OF THE DRAWINGS

Fig. 1 is a block diagram of a typical motion sensor.

Fig. 2 is block circuit diagram for the present invention.

Fig. 3 illustrates a test signal that may be utilized with the present invention.

Fig. 4 is a flow chart that illustrates the operation of the present invention.

### DETAILED DESCRIPTION OF THE PREFERRED EMBODIMENT

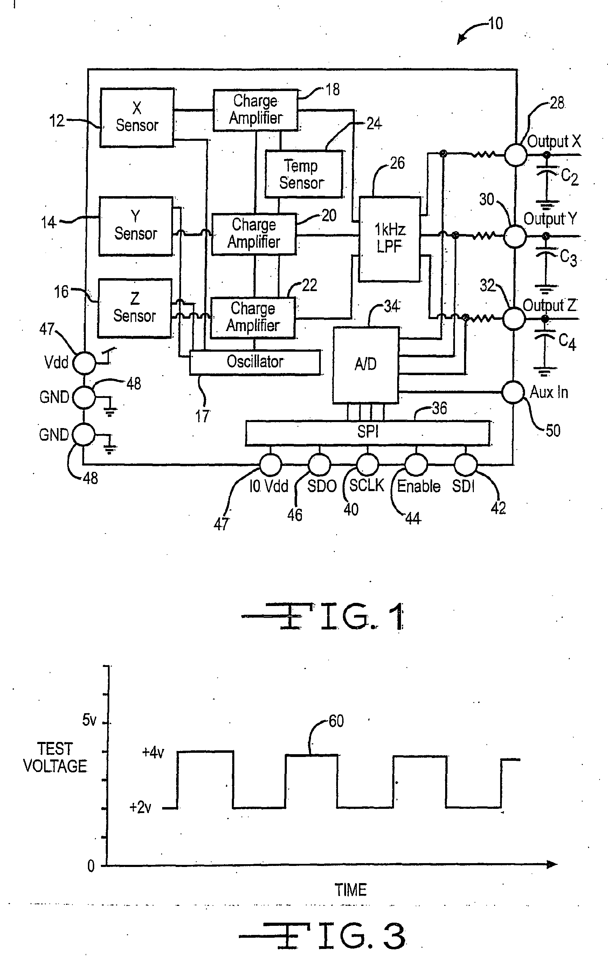

Referring now to the drawings, there is illustrated in Fig. 1 a block diagram for typical low cost motion sensor module 10. The motion sensor module 10 includes three accelerometers, or inertial sensors, that are labeled 12, 14 and 16 and are utilized to measure acceleration along three orthogonal axes designated as X, Y and Z (not shown), respectively. While three accelerometers are shown in Fig. 1, it will be appreciated that the invention also may be practiced with motion sensor modules that include less than three accelerometers. The accelerometers 12, 14 and 16 are excited by an internal oscillator 17 and function on the principal of a differential capacitance arising from acceleration-induced motion of sense elements within each of the accelerometers. The output of each of the accelerometers 12, 14 and 16 is electrically connected to a corresponding charge amplifier, labeled 18, 20 and 22, respectively, that amplifies the output signal generated by the associated accelerometer. The charge amplifiers for the sensor shown in Fig. 1 provide temperature compensation to the acceleration signals. Accordingly, each of the charge amplifiers 18, 20 and 22 are electrically connected to a temperature sensor 24. It will be appreciate that the invention also may be practiced without temperature compensation of the sensor output signal. The output signals from each of the charge amplifiers 18, 20 and 22 pass through a one KHz low pass filter 26.

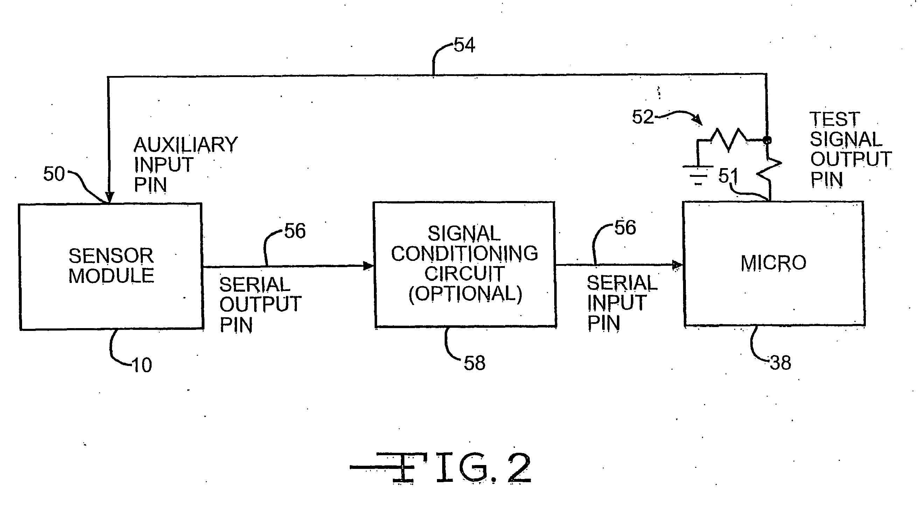

The motion sensor module 10 includes two methods for output of the fmal acceleration signals. Analog signals are available at three analog signal output pins, or ports, that are labeled 28, 30 and 32 and are connected through the sensor signal conditioning circuitry to the X, Y and Z acceleration sensors, respectively. Alternately, the analog output signals pass through an Analog to Digital (A/D) converter 34 and the resulting digital signals are then supplied to a Serial Peripheral Interface (SPI) 36 for digital communication. The SPI 36 provides synchronous serial communication between the sensor module 10 and an electronic brake system microprocessor 38, which is shown in Fig. 2. Use of the SPI 36 allows the microprocessor 38 to control multiple modules, including the sensor module 10 in a master-slave configuration.

The SPI 36 shown in Fig. 1 is a four wire synchronous serial interface that uses two control and two data lines. With respect to the microprocessor 38, a common serial clock signal is supplied to a clock input pin, or port, 40 on the SPI 36 and data from the microprocessor is supplied to all slave units through a data input pin, or port, 42. The microprocessor 38 generates an independent chip select signal that is applied to an enable pin, or port, 44 on the SPI 36. The enable pin 44 goes low at the start of a data transmission and then goes back to high at the end of the data transmission. The output of the sensor module 10 appears at a slave data output pin, or port, 46 that remains in a high impedance state when the module 10 is not selected to output data so as to not interfere with any active devices. Also shown in Fig. 1 are pins labeled 47 for supplying a power supply voltage V_{dd} to components within the sensor module 10 and ground pins 48 that are labeled GND.

While the sensor module 10 is illustrated in block diagram form in Fig. 1, it will be appreciated that the module would typically be fabricated as an Applied Specific Integrated Circuit (ASIC). Alternately, specific portions of the module may be ASIC's that are combined with discrete electronic components.

While the sensor module 10 does not include a self test input pin, the module does include an Auxiliary Input pin, or port, 50. The Auxiliary Input pin 50 is intended to utilize the Analog to Digital converter 34 in the sensor module 10 to reduce the Analog to Digital signal conversion load on the master microprocessor.
For example, a digital accelerometer, such as the module 10, could receive an analog output signal from a rotational rate sensor (not shown), convert it to a digital signal and send the converted digital signal in a serial data format with the digital accelerometer data to the microprocessor over a digital bus (not shown).

The present invention contemplates utilizing the Auxiliary Input pin 50 for fail safe testing of the sensing module 10. As best seen in Fig. 2, the Auxiliary Input pin 50 is used as a watchdog of the circuit operation. The microprocessor 38 generates a defined analog test signal at a test signal output pin, or port, 51 and applies the test signal to a resistive voltage divider, or level shifter, circuit 52. The voltage divider circuit 52 reduces the test signal magnitude to a value that is compatible with the analog to digital converter within the sensor module 10. The reduced analog test signal passes over a line 54 to the Auxiliary Input pin 50. The analog test signal is processed within the sensor module 10 and converted by the A/D converter 34 into a digital signal. The digital test signal is combined serially with the other output data within the sensor module 10 and sent back over the serial data bus 56 to the microprocessor 38. The test signal would also pass through any additional signal processing circuitry 58 that may be included to further modify the output of the motion sensor module 10. As shown if Fig. 2, such additional signal conditioning circuitry 58 is optional. While the test described above does not address failures of the sense elements in the accelerometers, the test does cover most of the control portion of the module ASIC and the module packaging. Additionally, the test may be run continuously without disturbing the actual acceleration measurements. While a voltage divider circuit 52 is shown in Fig. 2, it will be appreciated that the invention also may practiced without such a voltage divider circuit.

The invention contemplates utilization of one of several analog test signals. For example, the test signal output pin may be simply switched from ground potential to a high potential, such as five volts, or any voltage between zero and five volts. The magnitude of the returned test signal would then be compared to the magnitude of the test signal sent out by the microprocessor 38. If the returned signal has the same magnitude as the sent signal, the sensor and associated circuitry would be judged to be operating satisfactorily. Conversely, if the returned signal does not have the same magnitude as the sent signal, the sensor and associated circuitry would be judged to have failed and an error message would be generated and/or an error flag set. Alternately, the returned test signal may be compared to a threshold value that is a function of the test signal, such as, for example, 80 percent of the test signal magnitude. With the alternative approach, if the returned test signal is greater than or equal to the threshold, the sensor and associated circuitry would be judged to be operating satisfactorily. Conversely, if the returned signal is less than the threshold, the sensor and associated circuitry would be judged to have failed and an error message would be generated and/or an error flag set.

Another test signal that may be utilized is a square wave 60, as shown in Fig. 3. While the test signal output pin 51 of the microprocessor 38 may have any voltage between zero and five volts, the test signal shown in Fig. 3 varies between two and four volts. Thus, a signal is present all of the time and a failure, such as an open circuit that results in zero voltage will not mistaken for a zero voltage output signal. Additionally, the maximum voltage of four volts is selected to be compatible with the analog to digital converter within the sensor module 10. While the test signal is illustrated in Fig. 3 as varying between two and four volts, it will be appreciated that other minimum and maximum voltage values also may be utilized. The frequency of the test signal 60 is selected to be compatible with the bandwidth of the sensor module 10 and any associate circuitry.

As before, the returned test signal voltage values would be compared to the magnitude of the test signal sent out by the microprocessor 38 to determine whether the sensor module and associated circuitry are operating properly. Because two voltage levels are available in the square wave test signal, the comparison may be between only the maximum values, between only the minimum values or between both the maximum and minimum values. Alternately, the returned digital test signal would be compared to a threshold that is a function of the analog test signal. If the returned test signal is less than the threshold, an error message is generated. The threshold may be selected to be either a function of the maximum value of the analog test signal or a function of the minimum value of the analog test signal. The invention also contemplates utilizing two thresholds with one threshold being a function of the maximum value of the analog test signal and the other threshold being a function of the minimum value of the analog test signal. In this later case, if either of the maximum and minimum values of the returned test signal are less that the value of the corresponding threshold, an error message is generated. As another variation, the minimum value of the returned test signal may be compared to a range of values about the minimum value threshold with an error signal being generated if the minimum value of the returned test signal is outside of the acceptable range. Thus, if the minimum value of the returned test signal is too great, an error signal will be generated, in addition to an error signal being generated if the minimum value of the returned test signal is too low. In a similar manner, the maximum value of the returned test signal may be compared to a range of values about the maximum value threshold with an error signal being generated if the maximum value of the returned test signal is outside of the acceptable range. e

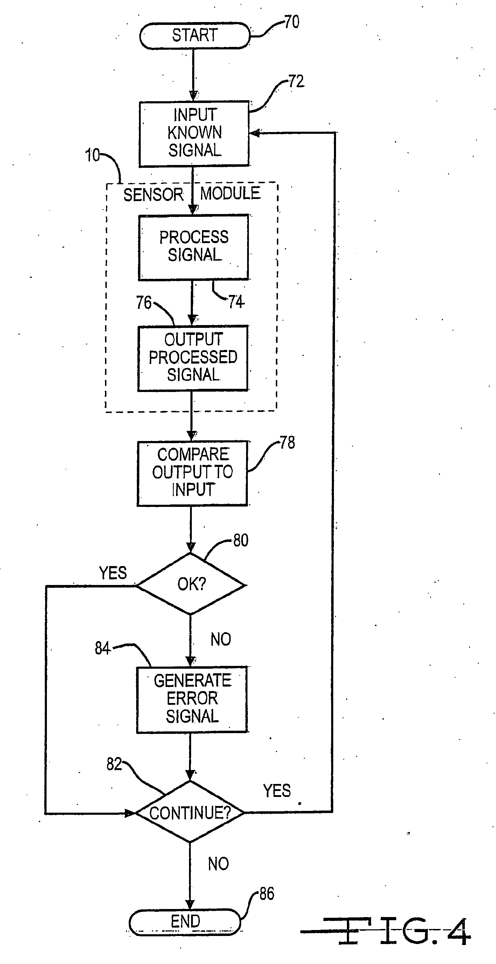

The operation of the fail safe test is controlled by an algorithm that is stored in the microprocessor 38. The operation of the algorithm will now be described with reference to the flow chart shown in Fig. 4. The algorithm is entered through block 70 and proceeds to functional block 72 where the microprocessor 38 generates the analog test signal. The test signal is received by the senor module 10 and processed through the module and converted into a digital signal in functional block 74. The processed digital test signal is then serially combined with the sensor output signals in functional block 76 and sent over the serial bus 56 back to the microprocessor 38. The algorithm then advances to functional block 78.

In functional block 78, the returned digital test signal is compared to the original analog test signal. As described above, the comparison may be directly between the two signals or between the returned digital signal and a threshold that is a function of the analog test signal. Additionally, the returned digital signal may be compared to two threshold values that correspond to the maximum and minimum values of the analog test signal. Also, the comparison criteria may be an exact match or a within a predetermined range, such as, for example greater than or equal to 80 percent of the magnitude of the analog test signal. The predetermined test range may be included in the calculation of the threshold. Alternately, an acceptable range of values about one or both of the thresholds may be used for the comparison criteria. The algorithm then advances to decision block 80.

In decision block 80, it is determined whether or not the comparison criteria were met in functional block 78. If the comparison criteria were successfully met, the algorithm transfers to decision block 82. If, in decision block 80, the comparison criteria were not successfully met, the algorithm transfers to functional block 84 where an error signal is generated. The operation occurring within functional block 84 may include generation of an actual error message and/or setting an error flag (not shown). The algorithm then continues to decision block 82.

In decision block 82, the algorithm determines whether it should continue. Criteria that would be utilized in decision block 82 would depend upon operating conditions, such as for example, continuous testing, periodic testing or single testing. Additionally, the criteria may include whether the vehicle engine is running, the vehicle ignition is in an on position or whether the vehicle is in motion. If it is determined in decision block 82 that testing is to continue, the algorithm transfers back to functional block 72 and repeats the test. If it is determined in decision block 82 that testing is to not continue, the algorithm transfers to end block 86 and exits.

While the invention has been described and illustrated above with a motion sensor package that includes three accelerometers, it will be appreciated that the invention also may be practiced with a motion sensor package that includes one or more angular rate sensors. Additionally, the inventor contemplates that the invention also may be practiced with a motion sensor package that includes both accelerometers and angular rate sensors.

In accordance with the provisions of the patent statutes, the principle and mode of operation of this invention have been explained and illustrated in its preferred embodiment. However, it must be understood that this invention may be practiced otherwise than as specifically explained and illustrated without departing from its spirit or scope.

## Claims

1. A system for testing operation of a motion sensor comprising:
a motion sensor;
an analog to digital converter having an analog signal input port and a serial digital signal output port, said analog to digital converter connected to said motion sensor and operable to generate a digital motion sensor output signal; and
a microprocessor connected to said analog to digital converter, the system
**characterized in that**
said analog to digital converter also includes an auxiliary signal input port; and
said microprocessor is operable to apply an analog test signal to said analog to digital converter auxiliary signal input port; said analog to digital converter being operable to process said analog test signal and to serially combine the resulting digital test signal with said digital motion sensor output signal and to send said combined signal back to said microprocessor, said microprocessor being further operable to compare said digital test signal to a threshold that is a function of said analog test signal and to generate an error message upon said digital test signal being one of less than and greater than said threshold.
2. The system according to claim 1 wherein said analog test signal is a square wave.
3. The system according to claim 2 wherein said square wave has minimum voltage value that is greater than a normal low pin voltage value available from said microprocessor and a maximum voltage value that is less than a normal high pin voltage value available from said microprocessor.
4. The system according to claim 3 wherein the frequency of said square wave is compatible with the bandwidth of the motion sensor.
5. The system according to claim 4 wherein said motion sensor includes at least one accelerometer.
6. The system according to claim 5 wherein said motion sensor includes a plurality of accelerometers and said analog to digital converter is operative to serially combine the outputs from each accelerometer with said digital test signal and send the combined signals to said microprocessor.
7. The system according to claim 4 wherein said motion sensor includes at least one angular rate sensor.
8. The system according to claim 7 wherein said motion sensor includes a plurality of angular rate sensors and said analog to digital converter is operative to serially combine the outputs from each angular rate sensor with said digital test signal and send the combined signals to said microprocessor.
9. The system according to claim 6 wherein said microprocessor is included in vehicle electronic braking system.
10. The system according to claim 9 wherein said vehicle electronic braking system includes a vehicle stability control function.
11. A method for testing a motion sensor module comprising the following steps:
(a) providing a motion sensor module that includes an analog to digital converter having an analog signal input port and a serial digital signal output port, the analog to digital converter having an auxiliary signal input port and being operable to generate a digital motion sensor output signal, also providing a microprocessor connected to the analog to digital converter, the method **characterized by** the steps of;
(b) applying an analog test signal to the auxiliary signal input port of the analog to digital converter included in the motion sensor module;
(c) processing the analog test signal through the motion sensor module;
(d) converting the processed analog test signal into a digital test signal;
(e) transmitting the digital test signal to the microprocessor;
(f) comparing the digital test signal to a threshold that is a function of the analog test signal; and
(g) generating an error message upon determining that the digital test signal is one of less than and greater than the threshold.
12. The method for testing according to claim 11 wherein step (d) includes combining the digital test signal with a digital signal from the motion sensor into a serial data signal and step (e) includes transmitting the combined serial data signal to the microprocessor.
13. The method for testing according to claim 12 wherein the analog test signal applied to the auxiliary input pin of the motion sensor module in step (b) is a square wave.
14. The method for testing according to claim 13 wherein the motion sensor module provided in step (a) includes a plurality of accelerometers and further wherein the analog to digital converter is operative in step (d) to covert the digital output signals from each accelerometer into a digital accelerometer signal and to combine the resulting digital accelerometer signals with the digital test signal in a serial signal format, the analog to digital converter also operative in step (e) to transmit the combined signal to the microprocessor.
15. The method for testing according to claim 13 wherein the motion sensor module provided in step (a) includes a plurality of angular rate sensors and further wherein the analog to digital converter is operative in step (d) to covert the digital output signals from each angular rate sensor into a digital accelerometer signal and to combine the resulting digital accelerometer signals with the digital test signal in a serial signal format, the analog to digital converter also operative in step (e) to transmit the combined signal to the microprocessor.
